Europäisches Patentamt

European Patent Office

Office européen des brevets

(11) Publication number: **0 468 414 B1**

# EUROPEAN PATENT SPECIFICATION

(45) Date of publication of patent specification: **01.03.95**   (51) Int. Cl.[6]: **D21H 17/01**, D21H 13/40

(21) Application number: **91112256.2**

(22) Date of filing: **22.07.91**

(54) **Paper using slag wool.**

(30) Priority: **26.07.90 JP 196110/90**

(43) Date of publication of application:
**29.01.92 Bulletin 92/05**

(45) Publication of the grant of the patent:
**01.03.95 Bulletin 95/09**

(84) Designated Contracting States:
**DE**

(56) References cited:
**EP-A- 0 347 810**

(73) Proprietor: **Kaneko, Senji**
**189, Iwasaki-cho,**
**Hodogaya-ku**
**Yokohama City,**
**Kanagawa Pref. (JP)**

Proprietor: **Shindo, Takashi**
**2-503, 1-chome, Nagata Minamidai,**
**Minami-ku**
**Yokohama City,**
**Kanagawa Pref. (JP)**

Proprietor: **NKK CORPORATION**
**1-2 Marunouchi 1-chome,**
**Chiyoda-ku**

**Tokyo (JP)**

(72) Inventor: **Kaneko, Senji**
**189, Iwasaki-Cho**
**Hodogaya-ku**
**Yokohama City,**
**Kanagawa Pref. (JP)**
Inventor: **Shindo, Takashi**
**2-503, 1-Chome, Nagata Minamidai,**
**Minami-Ku**
**Yokohama City,**
**Kanagawa Pref. (JP)**
Inventor: **Inokawa, Atsuo**
**c/o NKK Corporation,**
**1-2, 1-Chome, Marunouchi**
**Chiyoda-ku,**
**Tokyo (JP)**
Inventor: **Hoshino, Yasushi**
**c/o NKK Corporation,**
**1-2, 1-Chome, Marunouchi**
**Chiyoda-ku,**
**Tokyo (JP)**
Inventor: **Nakai, Kiyoto**
**131-22, Ise-Cho**
**Moriyama City,**
**Shiga Pref. (JP)**

(74) Representative: **Henkel, Feiler, Hänzel & Partner**
**ner**
**Möhlstrasse 37**
**D-81675 München (DE)**

**Description**

The present invention relates to paper made by using a slag wool.

Along with the popularization of the sewage system, the quantity of produced sludge such as grit and screenings in sewage is yearly increasing. Sludge has so far mostly been disposed of by burning same into ash and dumping the produced ash onto the land or into the sea. However, the increasing tendency toward the urbanization is making it more and more difficult to find places for dumping. It is also necessary to convert detrimental heavy metals contained in sludge into insoluble substances. The treatment of sludge is thus an important social issue at present, and the general attention is attracted to the effective utilization of sludge as a useful resource.

Under such circumstances, a slag wool available from sludge was developed. This slag wool is obtained by separating sludge from sewage, burning the thus separated sludge to obtain ash, melting the resulting ash to obtain a liquid sludge slag, and scattering the liquid sludge slag into slag wool. The slag wool available from sludge comprises fiber having almost the same chemical composition as that of the conventionally known slag wool obtained by scattering a liquid blast furnace slag.

From the standpoint of improving the environments of the earth, on the other hand, the protection of the forest resources is becoming an important issue. This is exerting a serious influence also on the paper making industry which uses pulp as its main raw material. It has therefore the task of developing paper-making raw materials other than pulp.

An object of the present invention is therefore to provide paper using a slag wool, which permits effective use of sludge contained in sewage, reduction of the raw material cost of paper through reduction of the pulp consumption, and protection of the forest resources.

In accordance with one of the features of the present invention, there is provided paper made by using a slag wool, which comprises:

from 30 to 70 wt.% of a slag wool obtainable by separating sludge from sewage, burning said sludge to obtain ash, melting said ash to obtain a liquid sludge slag, and scattering said liquid sludge slag,

and

the balance being pulp and incidental impurities;

and

said slag wool consisting essentially of:

| | |
|---|---|
| phosphorus pentoxide ($P_2O_5$) | up to 30 wt.%, |
| silicon dioxide ($SiO_2$) | from 10 to 50 wt.%, |
| aluminum oxide ($A\ell_2O_3$) | from 3 to 20 wt.%, |
| calcium oxide ($CaO$) | from 10 to 70 wt.%, |
| magnesium oxide ($MgO$) | up to 20 wt.%, and |
| iron oxide ($Fe_2O_3$) | from 5 to 25 wt.%. |

Fig. 1 is a partially cutaway perspective view illustrating a melting furnace and a slag wool manufacturing apparatus; and

Fig. 2 is a graph illustrating the relationship between the slag wool content and the tensile strength of paper.

Extensive studies were carried out to solve the above-mentioned problems. As a result, the following findings were obtained: It is possible to manufacture paper by separating sludge from sewage, burning the sludge to obtain ash, melting the ash to obtain a liquid sludge slag, scattering the liquid sludge slag to obtain a slag wool, and using the thus obtained slag wool as a raw material together with pulp.

The present invention was made on the basis of the above-mentioned findings, and paper of the present invention made by using a slag wool comprises a slag wool in an amount within a range of from 30 to 70 wt.% and the balance being pulp and incidental impurities, and the slag wool consists essentially of:

| phosphorus pentoxide ($P_2O_5$) | up to 30 wt.%, |
| silicon dioxide ($SiO_2$) | from 10 to 50 wt.%, |
| aluminum oxide ($Al_2O_3$) | from 3 to 20 wt.%, |
| calcium oxide (CaO) | from 10 to 70 wt.%, |
| magnesium oxide (MgO) | up to 20 wt.%, and |
| iron oxide ($Fe_2O_3$) | from 5 to 25 wt.%. |

First, the process for obtaining a slag wool from sludge is described below with reference to the drawing.

Sludge is separated from sewage, and the separated sludge is thickened in a thickening equipment. The thickened sludge is dewatered in a dewatering equipment. Then, the dewatered sludge is further dried into a cakey state.

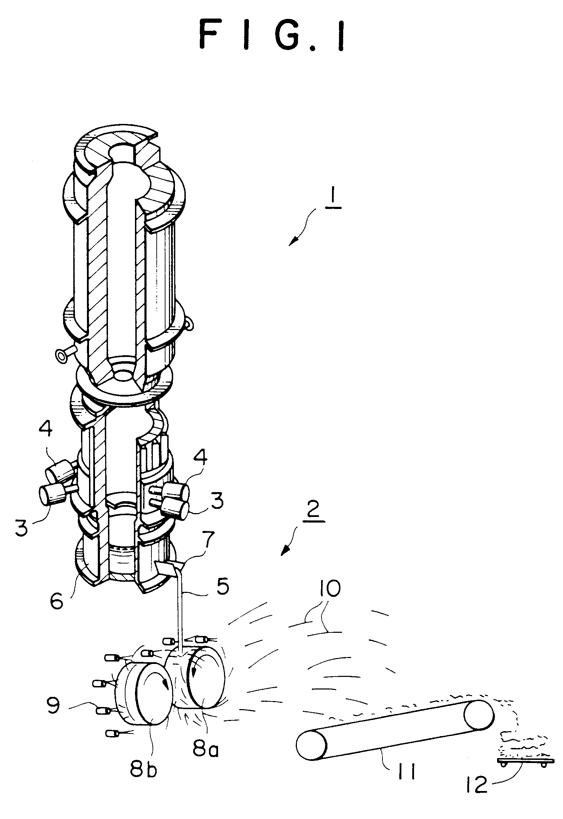

Then, a slag wool is prepared by means of a melting furnace 1 and a slag wool manufacturing apparatus 2 shown in Fig. 1. More specifically, in the melting furnace 1, 3 is a burner, and 4 is a sludge supply port. A mixture of the dried sludge and a calcium content adjusting agent described later is supplied into the melting furnace 1 through the sludge supply port 4, and a high-temperature combustion gas is blown into the melting furnace 1 through the burner 3 to burn the mixture into sludge ash. The resultant sludge ash is then melted by the high-temperature combustion gas from the burner 3 into a liquid sludge slag 5. The thus obtained liquid sludge slag 5 is once stored in a sludge slag sump 6, and then discharged in the form of a falling flow from a sludge slag discharge port 7.

A liquid sludge slag may be obtained by burning the dried sludge in an incinerator other than the above-mentioned melting furnace 1, adding a calcium content adjusting agent to the resultant ash, mixing these substances to form a mixture, and melting the resultant mixture in the melting furnace 1 in the same manner as above.

A slag wool is manufactured from the liquid sludge slag 5 thus discharged from the sludge slag discharge port 7 by means of the slag wool manufacturing apparatus 2, as follows: More specifically, the liquid sludge slag 5 discharged from the melting furnace 1 is caused to fall onto the outer peripheral surface of a disk-shaped spinning wheel 8a having a prescribed thickness, which is rotating at a high speed in the direction as indicated by the arrow in Fig. 1, for scattering, and is further scattered by the impingement against the outer peripheral surface of another spinning wheel 8b, which is also rotating at a high speed in the direction as indicated by the arrow in Fig. 1. The scattered sludge slag 5 is then blown off by air jets ejected from a plurality of air nozzles 9 provided near the spinning wheels 8a and 8b, to solidify into the form of fiber, whereby a slag wool 10 is obtained. The thus obtained slag wool 10 falls down on a recovery belt conveyor 11 and is then gathered in a carriage 12.

The chemical composition of the slag wool used in the present invention is limited within a range as described above for the following reasons.

Phosphorus pentoxide, silicon dioxide, aluminum oxide, calcium oxide, magnesium oxide and iron oxide are components, which are originally contained in sludge.

(1) Phosphorus pentoxide ($P_2O_5$):

A phosphorus pentoxide content of over 30 wt.% leads to a poorer flexibility of the slag wool. The phosphorus pentoxide content is therefore limited to up to 30 wt.%.

(2) Aluminum oxide ($Al_2O_3$):

An aluminum oxide content of over 20 wt.% results in a higher melting point of sludge ash. With an aluminum oxide content of under 3 wt.%, on the other hand, heat resistance of the slag wool is deteriorated. The aluminum oxide content is therefore limited within a range of from 3 to 20 wt.%.

(3) Magnesium oxide (MgO):

Magnesium oxide has a function of improving strength and flexibility of the fiber composing the slag wool and of reducing viscosity of the liquid sludge slag. With a magnesium oxide content of over 20 wt.%, however, the above-mentioned function is saturated. The magnesium oxide content is therefore limited to up to 20 wt.%.

(4) Iron oxide ($Fe_2O_3$):

Iron oxide has a function of improving strength of the fiber composing the slag wool. With an iron oxide content of under 5 wt.%, however, a desired effect as described above is unavailable. With an iron oxide content of over 25 wt.%, on the other hand, metallic iron is precipitated in the liquid sludge slag. Metallic iron exerts an adverse effect in that it damages the spinning wheels 8a and 8b for scattering the liquid sludge slag. This requires operation of removing metallic iron from the liquid sludge slag, thus forming difficulties in operation. The iron oxide content is therefore limited within a range of from 5 to 25 wt.%.

(5) Silicon dioxide ($SiO_2$):

Silicon dioxide has a function of improving strength of the fiber composing the slag wool. The silicon dioxide content should therefore preferably be the largest possible. A silicon dioxide content of over 50 wt.% leads, however, to a higher viscosity of the liquid sludge slag, thus making it impossible to obtain a slag wool suitable as a raw material for paper as will be described in section (7) hereafter. Furthermore, a silicon dioxide content of over 50 wt.% increases the temperature for melting the sludge ash. With a silicon dioxide content of under 10 wt.%, on the other hand, a desired effect as described above is unavailable in the above-mentioned function of improving strength of the fiber composing the slag wool. The silicon dioxide content is therefore limited within a range of from 10 to 50 wt.%.

(6) Calcium oxide (CaO):

Calcium oxide has a function of reducing viscosity of the liquid sludge slag. With a calcium oxide content of over 70 wt.%, however, the slag wool becomes brittle and the quality of the slag wool is degraded. With a calcium oxide content of under 10 wt.%, on the other hand, a desired effect is not available in the above-mentioned function of reducing viscosity of the liquid sludge slag. The calcium oxide content is therefore limited within a range of from 10 to 70 wt.%.

(7) The fiber composing the slag wool should preferably have the smallest possible diameter as a raw material for paper. In order to achieve a desired diameter of the fiber composing the slag wool, viscosity of the liquid sludge slag should preferably be the smallest possible, more particularly, under 2 Pa•s (20 poise). In order to reduce viscosity of the liquid sludge slag, it is necessary to adjust the ratio of the calcium oxide content to the silicon dioxide content within a desired range. For the purpose of adjusting the ratio of the calcium oxide content to the silicon dioxide content, therefore, the calcium content adjusting agent is added to the dried sludge or to the sludge ash. Calcium carbonate ($CaCO_3$) or dolomite ($CaMg(CO_3)_2$) is used as the calcium content adjusting agent.

The calcium content adjusting agent is added in the following manner: The calcium content adjusting agent is added to the dried sludge, and these substances are mixed to form a mixture. Then the resultant mixture is supplied into the melting furnace 1. Or, the calcium content adjusting agent is added to the sludge ash obtained by burning the dried sludge in an incinerator, and these substances are mixed to form a mixture. Then, the resultant mixture is supplied into the melting furnace 1.

The content of the calcium content adjusting agent should preferably be within a range of from 20 to 60 wt.% relative to the total amount of the sludge ash and the calcium content adjusting agent. When the content of the calcium content adjusting agent is under 20 wt.% or over 60 wt.%, the ratio of the calcium oxide content to the silicon dioxide content cannot be brought into the desired range, thus making it impossible to maintain a desired value of viscosity of the liquid sludge slag.

(8) Generally, sodium oxide ($Na_2O$), potassium oxide ($K_2O$) and sulfur (S) are inevitably contained in sludge. With a view not to impairing the object of the present invention, the contents of $Na_2O$, $K_2O$ and S have to be minimized. The total amount of $Na_2O$, $K_2O$ and S should therefore preferably be up to 5 wt.% in total.

The melting temperature of the sludge ash in the melting furnace 1 is within a range of from 1,400°C to 1,650°C.

As pulp used as a raw material for paper using the slag wool of the present invention, there are used pulp of timber and pulp of used paper, which have conventionally been employed for paper-making raw materials. Pulp of used paper is employed, not alone, but in combination with pulp of timber.

Now, the paper using the slag wool of the present invention is described.

The paper using the slag wool of the present invention comprises the slag wool in an amount within a range of from 30 to 70 wt.% and the balance being pulp. A slag wool content of over 70 wt.% results in a smaller tensile strength of the paper. A slag wool content of under 30 wt.% is economically unfavorable because of an increased consumption of pulp. This is also contrary to the object of the present invention of effectively utilizing sludge. The slag wool content is therefore limited within a range of from 30 to 70 wt.%.

Paper having a weight within a range of from 30 to 140 $g/m^2$ is obtained with the use of the slag wool and pulp in accordance with a manufacturing method shown in examples described later. Applications of this paper mainly include document sheets, printing sheets for weekly magazines, and visiting cards.

Now, the paper using the slag wool of the present invention is described further in detail by means of examples in comparison with examples for comparison.

EXAMPLE 1

Sludge was separated from sewage, and the separated sludge was thickened in a thickening equipment. The thickened sludge was dewatered in a dewatering equipment. Then, the dewatered sludge was further dried. Then, calcium carbonate ($CaCO_3$) was added as a calcium content adjusting agent to the dried sludge to form a mixture. The calcium carbonate content was 28.6 wt.% relative to the total amount of the sludge ash and calcium carbonate, as shown in Table 2.

Then, a slag wool having a chemical composition within the scope of the present invention was prepared by means of the melting furnace 1 and the slag wool manufacturing apparatus 2 as shown in Fig. 1. More specifically, the mixture thus formed as described above was supplied into the melting furnace 1 through the sludge supply port 4, and a high-temperature combustion gas was blown into the melting furnace 1 through the burner 3 to burn the mixture into sludge ash. The chemical composition of the sludge ash is shown in Table 1. The resultant sludge ash was then melted by the high-temperature combustion gas from the burner 3 into a liquid sludge slag 5. The thus obtained liquid sludge slag 5 was once stored in the sludge slag sump 6, and then discharged in the form of a falling flow from the sludge slag discharge port 7.

Then, the liquid sludge slag 5 discharged from the melting furnace 1, was caused to fall onto the outer peripheral surface of the disk-shaped spinning wheel 8a having a prescribed thickness, which was rotating at a high speed in the direction as indicated by the arrow in Fig. 1, for scattering, and was further scattered by the impingement against the outer peripheral surface of another spinning wheel 8b, which was also rotating at a high speed in the direction as indicated by the arrow in Fig. 1. The scattered liquid sludge slag 5 was then blown off by air jets ejected from the plurality of air nozzles 9 provided near the spinning wheels 8a and 8b, to solidify into the form of fiber, whereby a slag wool 10 was obtained. The thus obtained slag wool 10 falled down on the recovery belt conveyor 11 and was then gathered in the carriage 12. The chemical composition of the thus prepared slag wool is shown in Table 3.

Then, with the use of the thus prepared slag wool, a sample of paper of the present invention (hereinafter referred to as the "sample of the invention") No. 1 was prepared in accordance with a manufacturing method described later. The sample of the invention No. 1 comprised the slag wool in an amount of 70 wt.% and pulp in an amount of 30 wt.% as shown Table 4, both of which were within the scope of the present invention.

In the sample of the invention No. 1, an NBKP pulp having a degree of freeness of 300 cc as measured by a Canadian freeness tester, was employed as the pulp. The NBKP is a symbol representing a class of pulp, which is a bleached soft-wood pulp.

Table 1 (wt.%)

| $P_2O_5$ | $SiO_2$ | $Al_2O_3$ | CaO | MgO | $Fe_2O_3$ | Others |
|---|---|---|---|---|---|---|
| 6.5 | 48.0 | 17.5 | 16.5 | 2.0 | 8.0 | Balance |

Table   2          (wt.%)

| Calcium carbonate (CaCO₃) | 28.6 |
|---|---|
| Sludge ash | 71.4 |

Table   3          (wt.%)

| P₂O₅ | SiO₂ | Aℓ₂O₃ | CaO | MgO | Fe₂O₃ | Others |
|---|---|---|---|---|---|---|
| 5.3 | 39.2 | 14.3 | 31.8 | 1.6 | 6.5 | Balance |

Table   4

| | No. | Chemical composition of paper (wt.%) | | | Tensile strength (Kg/width of 5cm) | Weight of paper (g/m²) |
|---|---|---|---|---|---|---|
| | | Slag wool | Pulp | | | |
| | | | Timber pulp | Used paper pulp | | |
| Sample of the invention | 1 | 70 | 30 | 0 | 3.5 | 65 |
| | 2 | 35 | 65 | 0 | 5.0 | 65 |
| Sample for comparison | 1 | 0 | 30 | 70 | 5.5 | 65 |
| | 2 | 85 | 15 | 0 | 2.5 | 65 |

The sample of the invention No. 1 was prepared as follows in accordance with the conventional paper-making method. More particularly, water and the prescribed chemical agents were added to the slag wool and the pulp in amounts as described above to obtain a slurry mixed solution. Then, the resultant mixed solution was introduced into a sheet-making machine to form same into a sheet, which was dried to prepare paper having a weight of 65 g/m² as shown in Table 4.

Then, tensile strength of the thus prepared sample of the invention No. 1 was measured by the following method: The sample of the invention No. 1 was cut into a sheet having a prescribed length with a width of 5 cm, and an end of the cut sheet was fixed by a fixing means. The other end was pulled by a pulling means, and tensile strength at which the sheet fractured was measured. The result is shown in Table 4.

As shown in Table 4, the sample of the invention No. 1 had a tensile strength of 3.5 kg/width of 5 cm, which revealed that the sample of the invention No. 1 had a tensile strength sufficient to permit use as a material for document sheets, printing sheets and visiting cards.

Then, printing was applied to the sample of the invention No. 1. This demonstrated that it was possible to print such fine characters as those usually used in visiting cards. The printed characters showed no blot and were well legible. This suggested the applicability of the sample of the invention No. 1 for printing.

EXAMPLE 2

With the use of the same slag wool and pulp as those used in Example 1, a sample of paper of the present invention (hereinafter referred to as the "sample of the invention") No. 2, having a weight of 65 g/m$^2$, was prepared in accordance with the same manufacturing method as that in Example 1. The sample of the invention No. 2 comprised the slag wool in an amount of 35 wt.% and pulp in an amount of 65 wt.% as shown in Table 4, both of which were within the scope of the present invention.

Then, tensile strength of the thus prepared sample of the invention No. 2 was measured by the same method as that in Example 1. The result is shown in Table 4.

As shown Table 4, the sample of the invention No. 2 had a tensile strength of 5.0 kg/width of 5 cm, and was thus more excellent in tensile strength than the sample of the invention No. 1. This revealed that paper using slag wool, which had a higher pulp content, was more excellent in tensile strength.

Then, printing was applied to the sample of the invention No. 2. This demonstrated that it was possible to print such fine characters as those usually used in visiting cards. The printed characters showed no blot and were well legible. This suggested the applicability of the sample of the invention No. 2 for printing.

EXAMPLE FOR COMPARISON 1

With the use of the same pulp of timber as that use in Example 1 and pulp of used paper having a degree of freeness of 750 cc as measured by a canadian freeness tester, and without the use of the slag wool, a sample of paper outside the scope of the present invention (hereinafter referred to as the "sample for comparison") No. 1, having a weight of 65 g/m$^2$, was prepared in accordance with the same manufacturing method as that in Example 1. The sample for comparison No. 1 comprised pulp of timber in an amount of 30 wt.% and pulp of used paper in an amount of 70 wt.% as shown in Table 4, which were outside the scope of the present invention in that there was used no slag wool.

Then, tensile strength of the thus prepared sample for comparison No. 1 was measured by the same method as that in Example 1. The result is shown in Table 4.

As shown Table 4, the sample for comparison No. 1 had a tensile strength of 5.5 kg/width of 5 cm which was higher by 0.5 kg/width of 5 cm than that of the sample of the invention No. 2. This revealed that the sample of the invention No. 2, which contained a relatively small amount of slag wool, had substantially the same tensile strength as that of the sample for comparison No. 1, which totally comprised pulp and contained no slag wool.

EXAMPLE FOR COMPARISON 2

With the use of the same slag wool and pulp of timber as those used in Example 1, a sample of paper outside the scope of the present invention (hereinafter referred to as the "sample for comparison") No. 2, having a weight of 65 g/m$^2$, was prepared in accordance with the same manufacturing method as that in Example 1. The sample for comparison No. 2. The sample for comparison No. 2 comprised the slag wool in an amount of 85 wt.% and pulp in an amount of 15 wt.% as shown in Table 4, both of which were outside the scope of the present invention.

Then, tensile strength of the thus prepared sample for comparison No. 2 was measured in the same manner as that in Example 1. The result is shown in Table 4.

As shown Table 4, the sample for comparison No. 2 had a tensile strength of 2.5 kg/width of 5 cm, and was thus inferior to the samples of the invention Nos. 1 and 2 in tensile strength.

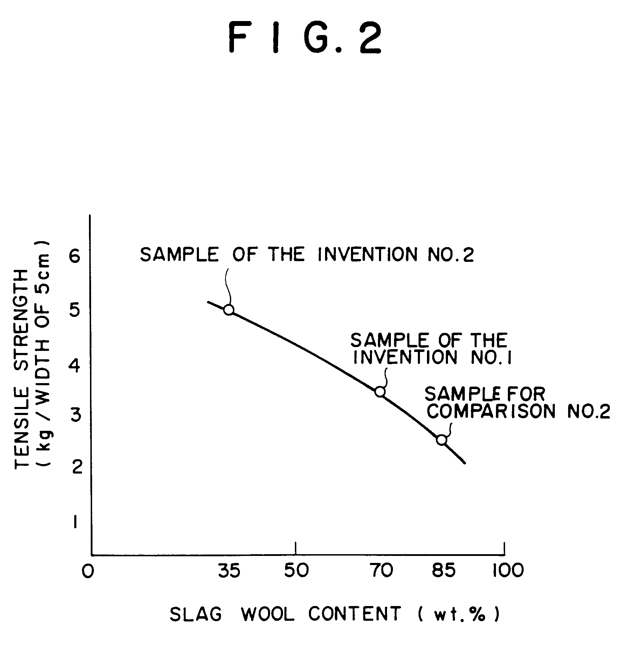

Fig. 2 is a graph illustrating the relationship between the slag wool content and tensile strength of paper. As is clear from Fig. 2, with a slag wool content within the scope of the present invention of from 30 to 70 wt.%, there is available paper having a tensile strength of at least 3.5 kg/width of 5 cm. It is also suggested that a lower slag wool content leads to a higher tensile strength of paper.

According to the present invention, as described above in detail, it is possible to obtain paper using a slag wool, which permits effective use of sludge contained in sewage, reduction of the material cost of paper by reducing the pulp consumption, and protection of the forest resources, thus providing industrially useful effects.

**Claims**

1. Paper made by using a slag wool, which comprises:
    from 30 to 70 wt.% of a slag wool obtainable by separating sludge from sewage, burning said sludge to obtain ash, melting said ash to obtain a liquid sludge slag, and scattering said liquid sludge slag,

and

the balance being pulp and incidental impurities;

said slag wool consisting essentially of:

| | |
|---|---|
| phosphorus pentoxide ($P_2O_5$) | up to 30 wt.%, |
| silicon dioxide ($SiO_2$) | from 10 to 50 wt.%, |
| aluminum oxide ($A\ell_2O_3$) | from 3 to 20 wt.%, |
| calcium oxide (CaO) | from 10 to 70 wt.%, |
| magnesium oxide (MgO) | up to 20 wt.%, and |
| iron oxide ($Fe_2O_3$) | from 5 to 25 wt.%. |

2. Paper as claimed in Claim 1, wherein:

the total amount of sodium oxide ($Na_2O$), potassium oxide ($K_2O$) and sulfur (S) as undesirable impurities contained in said sludge is up to 5 wt.%.

**Patentansprüche**

1. Papier, hergestellt unter Verwendung einer Schlacken- bzw. Mineralwolle, welches besteht aus:

30 bis 70 Gewichtsprozent einer Schlacken- bzw. Mineralwolle, die erhalten werden kann, indem Schlamm von Abwasser getrennt wird, der Schlamm verbrannt wird, um Asche zu erhalten, die Asche geschmolzen wird, um eine flüssige Schlammschlacke zu erhalten, und die flüssige Schlammschlacke zerstreut bzw. verteilt wird,

und

dem Rest, den Zellstoff bzw. Papiermasse und unwesentliche Verunreinigungen ausmachen;

wobei die Schlacken- bzw. Mineralwolle im wesentlichen aus:

| | |
|---|---|
| Phosphorpentoxid ($P_2O_5$) | bis zu 30 Gewichtsprozent, |
| Siliziumdioxid ($SiO_2$) | 10 bis 50 Gewichtsprozent, |
| Aluminiumoxid ($Al_2O_3$) | 3 bis 20 Gewichtsprozent, |
| Kalziumoxid (CaO) | 10 bis 70 Gewichtsprozent, |
| Magnesiumoxid (MgO) | bis zu 20 Gewichtsprozent, und |
| Eisenoxid ($Fe_2O_3$) | 5 bis 25 Gewichtsprozent. |

besteht.

2. Papier nach Anspruch 1, worin:

die Gesamtmenge an Natriumoxid ($Na_2O$), Kaliumoxid ($K_2O$) und Schwefel (S) als unerwünschte Verunreinigungen, die in dem Schlamm enthalten sind, bis zu 5 Gewichtsprozent beträgt.

**Revendications**

1. Papier réalisé en utilisant une laine de laitier, qui comporte :

de 30 à 70 % en poids d'une laine de laitier pouvant être obtenue en séparant les boues des eaux d'égout, en brûlant lesdites boues pour obtenir une cendre, en faisant fondre ladite cendre pour obtenir un laitier de boues liquide, et en dispersant ledit laitier de boues liquide,

et

le reste étant de la pulpe et des impuretés accidentelles;

ladite laine de laitier étant constituée essentiellement de :

| | |
|---|---|
| pentoxyde de phosphore ($P_2O_5$) | jusqu'à 30 % en poids, |
| bioxyde de silicium ($SiO_2$) | de 10 à 50 % en poids |
| oxyde d'aluminium ($Al_2O_3$) | de 3 à 20 % en poids |
| oxyde de calcium (CaO) | de 10 à 70 % en poids |
| oxyde de magnésium (MgO) | jusqu'à 20 % en poids, et |
| oxyde de fer ($Fe_2O_3$) | de 5 à 25 % en poids. |

2.  Papier tel que revendiqué dans la revendication 1, dans lequel :
la quantité totale d'oxyde de sodium ($Na_2O$), d'oxyde de potassium ($K_2O$) et de soufre (S) , en tant qu'impuretés indésirables, contenue dans lesdites boues peut aller jusqu'à 5 % en poids.

# F I G . I

# F I G. 2

SLAG WOOL CONTENT ( wt.% )